# EUROPÄISCHE PATENTSCHRIFT

(11) **EP 1 314 236 B1**
(45) Veröffentlichungstag und Bekanntmachung des Hinweises auf die Patenterteilung: **17.11.2010**
(21) Anmeldenummer: 01978089.9
(22) Anmeldetag: 31.08.2001
(51) Int. Cl.: H02K 21/00, H02K 21/14, H02K 1/27

(54) **ELEKTRISCHE MASCHINE FÜR HOHE UMMAGNETISIERUNGSFREQUENZEN**
ELECTRIC MACHINE FOR HIGH MAGNETIC REVERSAL FREQUENCIES
MACHINE ELECTRIQUE POUR FREQUENCES DE DEMAGNETISATION ELEVEES

(30) Priorität: 31.08.2000 DE 10043120
(43) Veröffentlichungstag der Anmeldung: 28.05.2003
(73) Patentinhaber: HILL, Wolfgang, 76135 Karlsruhe (DE)
(72) Erfinder: HILL, Wolfgang, 76135 Karlsruhe (DE)
(86) Internationale Anmeldenummer: PCT/DE2001/003373
(87) Internationale Veröffentlichungsnummer: WO 2002/019504

(56) Entgegenhaltungen:
- WO-A-98/48502
- FR-A- 2 775 393
- US-A- 3 401 290
- US-A- 5 952 758

## Beschreibung

Die Erfindung betrifft eine elektrische Maschine mit mindestens einem Primärteil und mindestens einen Sekundärteil, wobei das Sekundärteil relativ zum Primärteil durch die Kraft magnetischer Felder bewegbar ist.
Elektrische Maschinen, die hohe Drehzahlen bzw. als Lineardirektantrieben hohe Geschwindigkeiten zwischen zueinander bewegten Primär- und Sekundärteilen aufweisen, zeichnen sich durch hohe Leistungsdichten aus. In derartigen Maschinen entstehen erhebliche Verluste im weichmagnetischen Körper.

Werden neben hohen Spitzengeschwindigkeiten auch große Kräfte gefordert, so ergibt sich eine hohe Eckpunktleistung (P = v . F). Es ist bekannt diese Eckpunktleistung durch eine Feldschwächung bei hohen Drehzahlen zu vermindern. Induktionsmaschinen erlauben zwar eine einfache Umsetzung der Feldschwächung, erreichen bei vollem Erregerfeld aber nur ca. 70 % der Flächenschubdichte permanenterregter Maschinen. Dafür ist der Feldstellbereich bei permanenterregten Maschine eingeschränkt und verursacht entweder erhebliche Verluste durch hohe feldschwächende Ströme im Primärteil oder benötigt ein aufwendig aufgebautes, hybriderregtes Sekundärteil.

Aus der DE 28 02 753 C2 ist eine Synchronmaschine mit achsparallelem Magnetfeld bekannt, deren weichmagnetischer Körper aus magnetischem Pulver mit Bindemittelzusatz bestehen kann. Durch das Verdrehen von zwei scheibenförmigen mehrpoligen Mehrphasenwicklungen relativ zueinander in Umfangsrichtung wird ein Feldschwächung erreicht.

Aus der DE 41 37 457 C1 ist ein Permanentmagnetgenerator bekannt in dem die Spannung durch eine verstellbare Blende aus einem magnetisch leitenden Werkstoff geregelt wird.

In der DE 44 26 241 C2 wird eine elektrische Maschine mit Permanentmagneten in Sammleranordnung beschrieben, die sich durch die Ausgestaltung der Klebestellen auszeichnet.

In der DE 35 36 538 A1 wird eine Transversalflussmaschine mit Permanenterregung beschrieben, in der die Wicklung aus Spulen besteht, die nur einen Bruchteil des Maschinenumfangs nutzen. In den Spulen sind mehrer Weicheisenelemente angeordnet, wobei zwischen den Weicheisenelementen am Luftspalt Lücken bestehen, deren Breite in Bewegungsrichtung in etwa der Breite der Weicheisenelemente entspricht. Die Rückführung des Strom erfolgt auf der Außenseite der Weicheisenelemente, so dass nur ein kleiner Teil der Leiterlänge zur Kraftbildung beiträgt.
Aus der FR 2 775 393 ist eine hochpolige Transversalflussmaschine bekannt, deren Polzahl in Stator und Rotor unterschiedlich ist. Im Stator sind Spulen unterschiedlicher Phase tangential hintereinander angeordnet. Die tangentiale Länge der Spulen entspricht in etwa ihrer axialen Breite und Schnittbandkerne führen den Magnetfluss im Stator. Neben zwei schräg angeordneten Permanentmagneten weisen die tangential geblechten Rotorpole jeweils eine Erregerspule auf. Der Erregerstrom wird über Schleifringe zugeführt und kann das Erregerfeld der Permanentmagnete schwächen.

Aus der US 3,401,290 ist ein Generator mit Permanentmagneten bekannt dessen Spannung durch die axiale Verschiebung des Stators gegenüber dem Rotor verändert werden kann. Die Verschiebung vermindert das Erregerfeld entsprechend dem Verhältnis des Verstellwegs zur Gesamtlänge des Statorblechpakets.
Der Erfindung liegt die **Aufgabe** zugrunde, eine elektrische Maschine für hohe Ummagnetisierungsfrequenzen derart weiter zu bilden, dass eine hohe Leistungsdichte bei niedrigen Verlusten erreicht wird und der Herstellungsaufwand klein bleibt.
Diese Aufgabe wird erfindungsgemäß mit den Merkmalen der Ansprüche 1, 5 und '9 gelöst.
Erfindungsgemäß besteht die elektrische Maschine aus mindestens einem Sekundärteil und mindestens einem Primärteil, wobei Sekundärteil und Primärteil durch einen Luftspalt getrennt und gegeneinander in Bewegungsrichtung beweglich sind. Magnetkräfte erzeugen einen Schub in Bewegungsrichtung. Das mindestens eine Primärteil enthält eine Wicklung und weichmagnetisches Material, das den magnetischen Fluss transversal um Teile der Wicklung führt. Die Wicklung besteht vorzugsweise aus vorgefertigten Spulen, die eine in der Projektion zum Luftspalt nahezu rechteckförmige Form aufweisen und sich nicht überlappen. Spulen unterschiedlicher Phase sind quer zur Bewegungsrichtung nebeneinander angeordnet und in einer Variante in Bewegungsrichtung zueinander versetzt. Alternativ werden die im Sekundärteil quer zur Bewegungsrichtung liegenden Pole in Bewegungsrichtung versetzt zueinander angeordnet.

In der Projektion zum Luftspalt bildet jede Spule mit dem sie umgebenden weichmagnetischen Körper einen Mittelpol im Spulenzentrum und zwei Randpole, die quer zur Bewegungsrichtung rechts und links der Spule angeordnet sind. Die Randpole weisen gegenüber dem Mittelpol quer zur Bewegungsrichtung nur die halbe Breite auf. In Bewegungsrichtung ist die Abmessung des Mittelpols größer als quer zur Bewegungsrichtung.

Der Strom in Spulen, die in einer Laufbahn in Bewegungsrichtung hintereinander liegen, erzeugt in den innerhalb einer Laufbahn aufeinanderfolgenden Mittelpolen unterschiedliche gerichtete Magnetfelder. Die Anzahl der Spulen pro Laufbahn entspricht der Polzahl der Maschine. Die Anzahl der Laufbahnen entspricht der Phasenanzahl oder einem Vielfachen davon. Weist die Maschine pro Phase zwei oder mehr Laufbahnen auf, so werden diese vorzugsweise quer zur Bewegungsrichtung direkt nebeneinander angeordnet.

Die Spulen und die Pole des Sekundärteils weisen in Bewegungsrichtung einen 2 bis 30-fach größere Abmessung auf als quer zur Bewegungsrichtung. Jene Teile der Spule die teilweise oder ganz quer zur Bewegungsrichtung verlaufen, können nicht optimal zur Kraftbildung beitragen. Sie bilden den nicht effektiven Leiteranteil, der vorzugsweise nur 3 bis 30 % beträgt.
In einer rotierenden Maschine kann die Wicklung alternativ auch aus Leiterringen bestehen, deren Leiter größtenteils parallel zur Bewegungsrichtung verlaufen und nach einer Polteilung stets einen Teilbereich quer zur Bewegungsrichtung aufweisen, dessen Länge der Summe aus Spulenbreite und Zahnbreite entspricht.

Für hohe Füllfaktoren werden die Spulen vorzugsweise aus einem Profildraht in einer Vorrichtung vorgefertigt. Der hohe effektive Leiteranteil und der hohe Füllfaktor führen zu geringen ohmschen Verlusten.

Ein weiterer wesentlicher Vorteil der Erfindung sind niedrige Verluste im weichmagnetischen Körper. Durch die quer zur Bewegungsrichtung kleine Abmessung der Spule entstehen relativ zur Maschinengröße oder zur Luftspaltfläche kurze Flusswege. Der Anteil des weichmagnetischen Materials, der auf der vom Luftspalt abgewandten Seite der Spulen angeordnet ist (Jochbereich), kann klein gehalten werden. Damit sind elektrische Maschinen realisierbar, die in Richtung zum Luftspalt kleine Abmessungen aufweisen und damit "flach" bauen. Ein hohes Verhältnis von Luftspaltfläche zum effektiven Bauvolumen steigert die Leistungsdichte. Kurze Flusswege und damit eine relativ zur Leistung kleine weichmagnetische Masse senken die magnetischen Verluste.

Zusätzlich ermöglicht die Bauform den Einsatz besonders verlustarmer weichmagnetischer Werkstoffe. In einer Ausführungsform werden kammförmigen Bleche aus kornorientiertem Material eingesetzt. In einer weiteren Ausführungsform werden C-Kerne aus amorphen Bändern in die Spulen von der dem Luftspalt abgewandten Seite eingesetzt. Das amorphe Material weist bei hohen Frequenzen nur eine Bruchteil der Verluste der kristalliner Elektrobleche auf. Stanzwerkzeuge und Stanzverschnitt entfallen. Der weichmagnetische Körper wird durch einen Bestückungsautomaten aus einer Vielzahl baugleicher C-Kerne zusammengesetzt. Die C-Kerne können auch aus anderen verlustarmen, weichmagnetischen Bändern - z.B. nanokristalline Legierungen auf der Basis Nickel, Eisen oder Kobalt - bestehen.
Erfindungsgemäß wird der Magnetfluss im Sekundärteil ebenfalls transversal zur Bewegungsrichtung geführt. Unabhängig von der Art der Leiterrückführung im Primärteil wird die Leistungsdichte und der Wirkungsgrad der Maschine bei gleichem Statorvolumen durch eine Erhöhung der Luftspaltflussdichte verbessert. Die Flusskonzentration erfolgt erfindungsgemäße durch das Anordnen von mindestens zwei entgegengesetzt magnetisierten Hartmagneten quer zur Bewegungsrichtung hintereinander, wobei jeder Hartmagnet quer zur Bewegungsrichtung zwischen Sammlersegmenten liegt und in Bewegungsrichtung Sammlersegmente mit unterschiedlicher Polarität aufeinander folgen. Der weichmagnetische Körper wird gut ausgenutzt, indem die Luftspaltflussdichte im Bereich der Zahnenden 1,4 bis 2,3 T erreicht.

Das Verhältnis der Summe der beiden Kontaktflächen zu den Hartmagneten zur Fläche am Luftspalt entspricht dem Konzentrationsfaktor für den Magnetfluss. Bei festgelegter Pollänge in Bewegungsrichtung ist die Breite der Polfläche am Luftspalt beliebig wählbar. Unabhängig von der Polzahl und der Abmessung des Sekundärteils in Richtung zum Luftspalt ist somit der gewünschte Konzentrationsfaktor erreichbar.

In einer Variante weisen die Magnetpole des Sekundärteils, die entweder aus Luftspaltmagneten oder aus Sammlersegmenten bestehen, gegenüber den Polen des Primärteils einen Überhang quer zur Bewegungsrichtung auf. Der Überhang bewirkt ebenfalls eine Flusskonzentration.
Ein weiterer Grundgedanke der Erfindung ist die mechanische Feldschwächung einer durch Hartmagnete erregten elektrischen Maschine durch eine Verschiebung von Primärteil und Sekundärteil zueinander und zwar quer zur Bewegungsrichtung, wobei der mechanische Luftspalt konstant bleibt. Besonders effektiv wird dieser Stellvorgang, durch eine Unterteilung der Luftspaltflächen in Zonen mit unterschiedlicher magnetischer Wirkung, wobei diese Zonen quer zur Bewegungsrichtung um ein Vielfaches kleiner sind als das Sekundärteil oder Primärteil. Quer zur Bewegungsrichtung sind an der Luftspaltoberfläche vorzugsweise Magnetpolen mit entgegengesetzter Polarität angeordnet, wobei diese Pole durch magnetisch nicht aktive Pollücken getrennt sind.

Durch eine Verschiebung quer zur Bewegungsrichtung wird die Überdeckung der aufeinander ausgerichteten Polflächen des Sekundärteils und des Primärteils verschlechtert. Teile des Magnetflusses müssen im Luftspalt eine längere Wegstrecke zurücklegen. Der magnetische Widerstand des Magnetkreises steigt und der Fluss wird geschwächt. Zusätzlich ergeben sich für den Fluss Streuwege, die nicht um die Leiter der Wicklung führen. Beide Effekte können den wirksamen Magnetfluss nahezu vollständig abschwächen.

Der gleiche Effekt wird erreicht, wenn die Magnetpolfläche quer zur Bewegungsrichtung eine weichmagnetische Zahnung aufweist. Bei maximalem Magnetfluss sind die Zähne aufeinander ausgerichtet. Durch eine Verschiebung quer zur Bewegungsrichtung steigt der magnetische Widerstand des Magnetkreises und der Fluss wird geschwächt.

Für die Verschiebung quer zur Bewegungsrichtung ist jene Kraft zu überwinden, die versucht den Widerstand im Magnetkreis niedrig zu halten. Da diese Kraft auch beim Halten der permanent wirkt, sind Stellantriebe zu bevorzugen mit denen die verschobenen Position energiefrei gehalten werden kann.

Vorzugsweise wird das stationäre Teil, in den meisten Fällen das Primärteil, gegenüber dem Gehäuse bzw. den Lagersitzen verschoben. Das bewegbare Teil ist über Gleitführungen, die Kräfte in Bewegungsrichtung und in der Richtung zum Luftspalt aufnehmen mit dem Gehäuse verbunden. Große Berührungsflächen und eine Wärmeleitpaste oder ein im bewegten Teil integriertes Kühlsystem gewährleisten die Wärmeabführung in das Gehäuse. In einer vorteilhaften Ausführungsform besteht das bewegte Teil aus zwei gleichgroßen Hälften, die durch eine Stellantrieb in entgegengesetzte Richtung aus der Vorzugsstellung verschoben wird. Hierdurch kompensieren sich die Verstellkräfte und die Lager werden entlastet.
Alle drei Lösungsansätze der Erfindung basieren auf der Aufteilung der Luftspaltfläche in magnetisch wirksame Zonen, die in Bewegungsrichtung große und quer zur Bewegungsrichtung kleine Abmessungen aufweisen und die Luftspaltfläche schachbrettartig aufteilen. Jeder der drei Lösungsansätze leistet einen eigenständigen Beitrag zur Leistungssteigerung und Verlustminimierung in elektrische Maschinen für hohe Ummagnetisierungsfrequenzen.

Die Erfindung ist sowohl für Linearantriebe als auch für rotierende Antrieb mit radialer oder axialer Flussrichtung im Luftspalt anwendbar. Für die drei Hauptrichtungen (Koordinatenachsen) der Maschine werden die Umschreibungen "Bewegungsrichtung", "Richtung zum Luftspalt" und "quer zur Bewegungsrichtung" verwendet, da diese Umschreibungen auf alle relevanten Maschinentypen zutreffen. Weiterhin umfasst die Erfindung neben permanenterregten Maschinen auch Maschinen nach dem Reluktanzprinzip, wobei die Pole durch in Bewegungsrichtung abwechselnde weichmagnetische Zähne und Vertiefungen gebildet werden.
Die Erfindung wird in den Zeichnungen anhand vorteilhafter Ausführungsformen dargestellt.
- Fig. 1: zeigt ein dreiphasiges Primärteil mit sechs versetzten Spulen in einer Ansicht in der Richtung zum Luftspalt;
- Fig. 2.: zeigt einen Ausschnitt aus dem Sekundärteils von Fig. 1 mit 3 Polteilungen in Bewegungsrichtung in einer Ansicht in Richtung zum Luftspalt;
- Fig. 3: zeigt ein dreiphasiges Primärteil mit zwölf versetzten Spulen in einer Ansicht in der Richtung zum Luftspalt;
- Fig. 4: zeigt vier Querschnitte durch das Primärteil aus Fig. 3;
- Fig. 5: zeigt ein dreiphasiges Primärteil mit sechs Spulen in einer Sicht auf die Luftspaltfläche;
- Fig. 6: zeigt einen Ausschnitt aus dem zu Fig. 5 gehörenden Sekundärteils mit drei in Bewegungsrichtung versetzten Polteilungen in einer Sicht auf die Luftspaltfläche;
- Fig. 7: zeigt ein dreiphasiges Primärteil mit zwölf Spulen in einer Sicht auf die Luft- spaltfläche;
- Fig. 8: zeigt einen Querschnitte durch das Primärteil aus Fig. 7;
- Fig. 9: zeigt den Querschnitt einer Poleinheit mit Schnittbandkernen und Luftspaltmagneten aus einer Neodymlegierung mit Überhang;
- Fig. 10: zeigt den Querschnitt einer Poleinheit mit Schnittbandkernen und Hartmagneten aus einer Neodymlegierung zwischen Sammlersegmenten aus Elektroblech;
- Fig. 11: zeigt den Querschnitt einer Poleinheit mit kammförmigen Elektroblechen und Ferritmagneten zwischen Sammlersegmenten aus Eisenpulver;
- Fig. 12: zeigt einen Innenrotor mit Luftspaltmagneten;
- Fig. 13: zeigt einen Innenrotor mit Hartmagneten zwischen Sammlersegmenten;
- Fig. 14: zeigt eine Variante des Aufbau eines Innenrotors mit Hartmagneten zwischen Sammlersegmenten;
- Fig. 15: zeigt den Querschnitt einer Poleinheit mit zugehörigem Sekundärteilaus- schnitt bei ungeschwächtem Feld, halbem Stellweg und vollem Stellweg in drei Varianten.
- Fig. 16: zeigt den Längsschnitt einer dreiphasigen Maschine mit einem piezo- keramischen Stellantrieb;
- Fig. 17: zeigt den Längsschnitt einer Maschine mit konventioneller Wicklung und einer Zahnung der Polflächen quer zur Bewegungsrichtung;
- Fig. 18: zeigt den Querschnitt eines vierpoligen Rotors für die Maschine aus Fig. 17 mit versenkten Hartmagneten und Flusskonzentration.

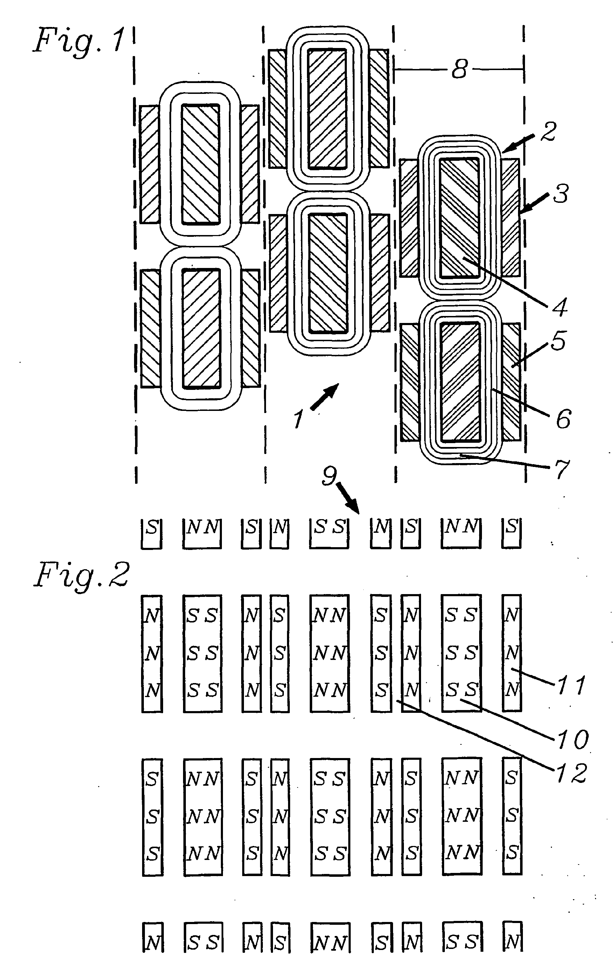

In **Figur 1** wird der Aufbau der elektromagnetischen Aktivteile eines erfindungsgemäßen Primärteils **1** in einer Ansicht auf die Luftspaltfläche dargestellt. Sechs rechteckförmige Spulen **2** bilden jeweils eingebettet in E-förmige weichmagnetische Körper **3** eine Elektropoleinheit bestehend aus einem Mittelpol **4** und zwei Randpolen **5.** Die in Bewegungsrichtung (auf dem Blatt vertikal) verlaufenden Teilbereiche **6** der Spulen **2** weisen eine deutlich größere Abmessung auf als die quer zur Bewegungsrichtung (horizontal) verlaufenden Teilbereiche **7.** Zwei in Bewegungsrichtung aufeinanderfolgende Spulen bzw. Elektropoleinheiten liegen in einer Laufbahn **8** und gehören zur gleichen Phase. Der Versatz zwischen den drei Phasen ist im Primärteil realisiert.
Das zugehörige Sekundärteil **9** zeigt Fig. **2****.** Da der Phasenversatz bereits im Primärteil **1** realisiert wird, bilden die Magnetpole **10, 11** des Sekundärteils Reihen quer zur Bewegungsrichtung. In Bewegungsrichtung aufeinanderfolgende Pole weisen entgegengesetzte Polaritäten auf. Wie im Primärteil liegen quer zur Bewegungsrichtung mittlere Pole **10** zwischen halb so breiten äußeren Polen **11.** Zwischen quer zur Bewegungsrichtung benachbarten äußeren Polen **11** befindet sich eine Lücke **12** mit niedriger magnetischer Leitfähigkeit, um Streuflüsse über die versetzten weichmagnetischen Körper des Primärteils zu vermeiden. Bei einer großen Lücke **12** kann die Polarität unterschiedlich sein. Sonst weisen benachbarte äußere Pole **11** vorzugsweise die gleiche Polarität auf.

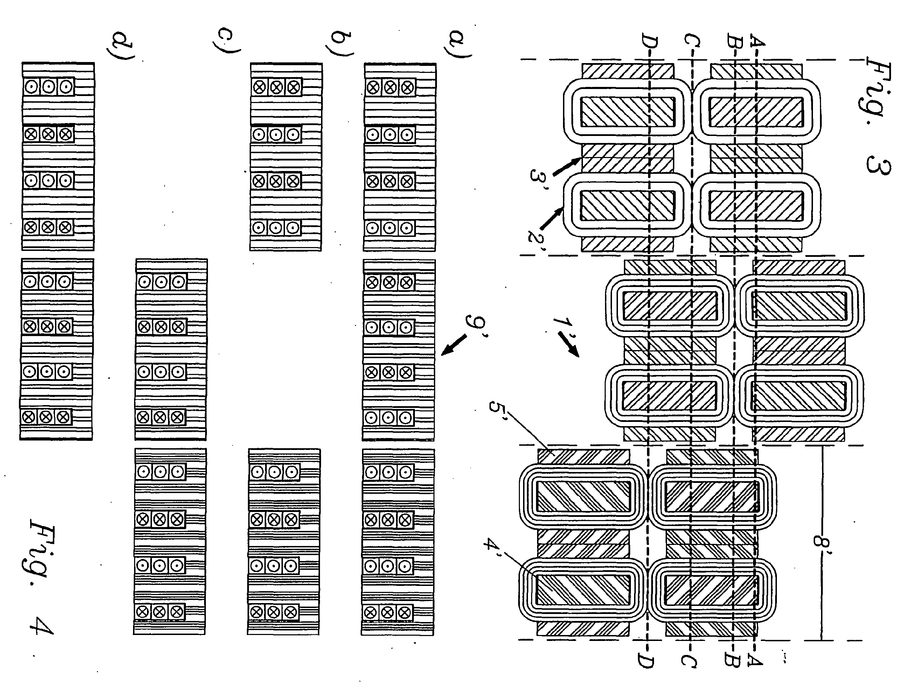

**Fig. 3** zeigt eine Luftspaltansicht eines dreiphasigen Primärteils **1'** mit zwölf Spulen in sechs Laufbahnen **8'.** Die zwei Laufbahnen einer Phase sind jeweils nebeneinander angeordnet und die Randpole **5'** von quer zur Bewegungsrichtung flächig aneinander liegenden Elektropoleinheiten bilden zusammen einen Pol der einem Mittelpol **4'** entspricht. Weichmagnetische Körper **3'** unterschiedlicher Phase weisen quer zur Bewegungsrichtung einen Abstand zueinander auf.
In **Fig. 4** sind Querschnitte durch die elektromagnetisch aktiven Komponenten des Primärteils **1**' aus Fig. 3 gemäß den Schnittlinien A-A bis D-D dargestellt. Im Querschnitt a) sind die weichmagnetischen Körper **3'** aller drei Phasen zu sehen. Die quer zur Bewegungsrichtung nebeneinander liegenden Spulen **2'** einer Phase sind gleich bestromt. Die Schnitte B-B, C-C und D-D sind so gelegt, dass sie jeweils im Spalt zwischen den Spulenendköpfen einer Phase liegen und diese Phase somit nicht im Schnittbild erscheint.

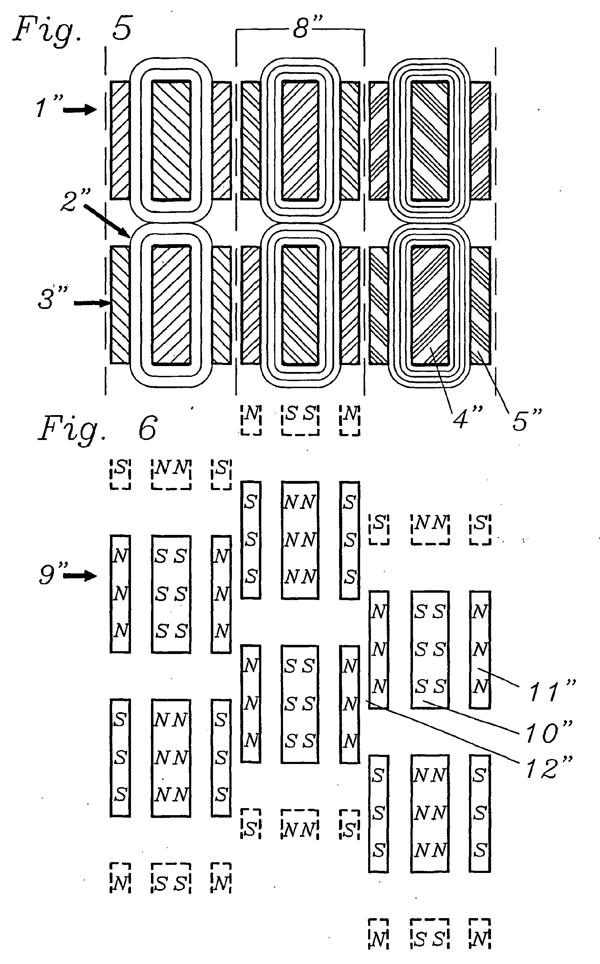

Analog zu den ersten beiden Figuren zeigen in **Fig. 5** und **Fig. 6** ein dreiphasiges Primärteil **1"** mit sechs Spulen **2"** und das dazugehörige Sekundärteil **9",** wobei der Phasenversatz aber im Sekundärteil realisiert wird. Spulen **2"** unterschiedlicher Phase liegen quer zur Bewegungsrichtung ohne Versatz nebeneinander. Dafür weisen die in Laufbahnen **8"** angeordneten Hartmagnete **13** im Sekundärteil **9"** einen Versatz zwischen den Laufbahnen **8"** auf, der in Bewegungsrichtung einem Drittel der Polteilung entspricht. Jede Laufbahn **8"** stellt ein einphasiges System dar, in dem die Elektropole des Primärteils **1"** mit Polen des Sekundärteils **9"** wechselwirken. Zur optimalen magnetischen Kopplung im Einphasensystem entsprechen sich am Luftspalt die Polflächen von Sekundärteil und Primärteil weitgehend. Die Pole des Sekundärteils können auch weichmagnetischen Zähne sein. Die Magnetfelder schließen sich innerhalb der Laufbahnen **8"** und die entkoppelten Einphasensysteme können den Phasenversatz beliebig im Primär- und/oder Sekundärteil realisieren.

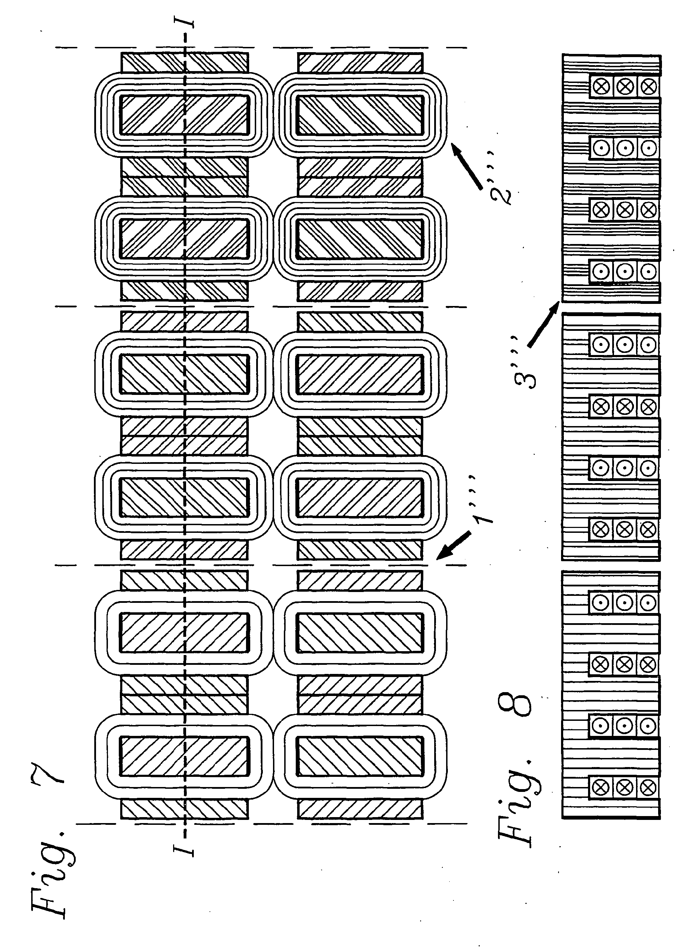

Erfolgt der Phasenversatz nur im Sekundärteil wird der Aufbau des Primärteils vereinfacht. Die **Fig. 7** zeigt ein derartiges dreiphasiges Primärteil **1'"** mit zwölf Spulen **2"'**. Zur Vergrößerung der Luftspaltfläche quer zur Bewegungsrichtung können pro Phase beliebig viele Laufbahnen nebeneinander angeordnet werden. Auch eine Parallelschaltung von Primärteilen gemäß Fig. 5 ist zu diesem Zweck möglich, vergrößert jedoch die Anzahl der magnetisch uneffektiven Spalte zwischen den Laufbahnen.

Liegen die weichmagnetischen Körper **3"'** - wie in Fig. **8** dargestellt - quer zur Bewegungsrichtung in einer Reihe, so können sie in einer entsprechenden Vertiefung des Primärteilgehäuses eingeschoben werden. Dies ist besonders in rotierenden Maschinen vorteilhaft, da sich die Laufbahnen in Bewegungsrichtung schließen und die Montage der vorgefertigten Elektropoleinheiten außerhalb eines zylindrischen Luftspalts nur von der Seite möglich ist.

Die in Fig. 1 bis 3 und Fig. 5 bis 7 dargestellten Luftspaltoberflächen können sowohl Teil eines Lineardirektantriebs als auch eine Abwicklung einer rotierenden Maschine mit zylindrischen Luftspalt sein. Werden die Laufbahnen in Bewegungsrichtung nach rechts oder links abgebogen, so entstehen Bogenantriebe, die sobald sie einen vollen Kreis bilden als Axialflussmaschinen bezeichnet werden können. Als Reluktanzmaschine entfallen die Bezeichnungen "N" für Nordpole und "S" für Südpole und die Sekundärteilpole sind als weichmagnetische Zähne ausgebildet, deren Abstand in Bewegungsrichtung in etwa ihrer Länge entspricht.

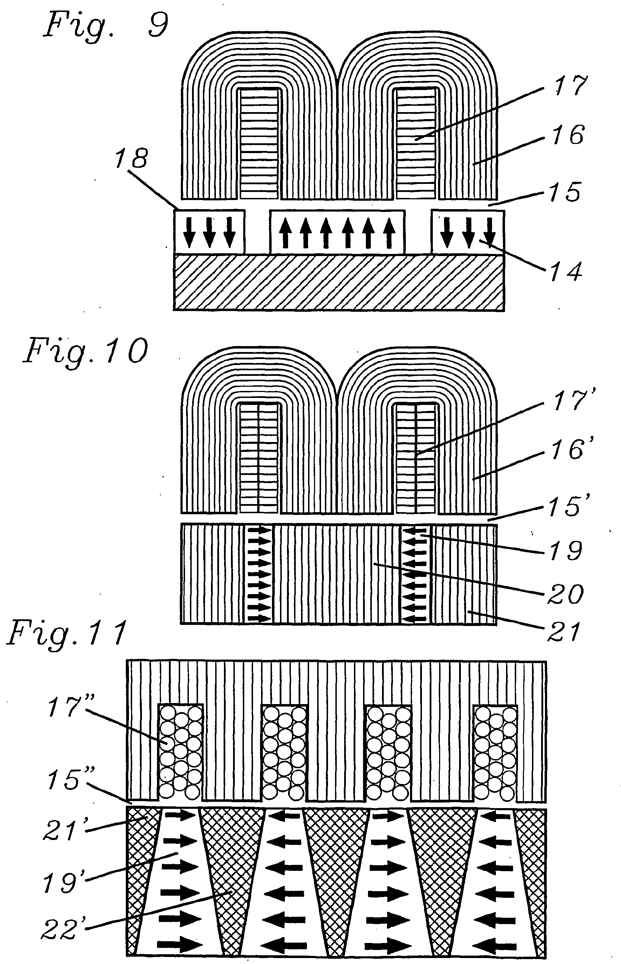

Für hohe Leistungsdichten werden Sekundärteile mit Hartmagneten bevorzugt. Die Figuren 9 bis 11 zeigen drei bevorzugte Varianten. Die Erfindung ist jedoch nicht auf diese Varianten beschränkt.

Eine einfache Montage ermöglichen die in **Fig. 9** gezeigte Hartmagnete **14,** die am Luftspalt **15** angeordnet sind. Eingesetzt werden vorzugsweise Seltenerdemagnete mit einer relativ zum Luftspalt großen Dicke. Schnittbandkerne **16** aus dünnen Bändern mit niedrigen Verlusten bei hohen Frequenzen führen den Magnetfluss um die Spule **17** aus Profildraht. Die Hartmagnete **14** sind quer zur Bewegungsrichtung breiter als die Polflächen der Schnittbandkerne. Der Überhang **18** beträgt vorzugsweise das 0,5 bis 2-fache des Luftspalts **15.**

Für hohe Leistungsdichten kommen weichmagnetische Werkstoffe zum Einsatz die höhere Flussdichten (1,5 bis 2,3 T) ermöglichen. Dieses Flussdichten werden durch eine Sammleranordnung der Hartmagnete **19 -** wie in **Fig. 10** dargestellt - realisiert. Die Flussdichte von quer zur Bewegungsrichtung magnetisierte Hartmagnete **19** wird in Sammlersegmenten **20, 21** zum Luftspalt hin konzentriert. Das Verhältnis der Abmessung der Magnete in Richtung zum Luftspalt **15'** zur Breite der Randpole quer zur Bewegungsrichtung bestimmt den Faktor der Flusskonzentration.

Durch quer zur Bewegungsrichtung schmale Pole des Primärteils kann der Flusskonzentrationsfaktor unabhängig von der Polzahl nahezu beliebig gesteigert werden. Auch in niederpoligen Maschinen sind hohe Luftspaltflussdichten (bis 2,3 T) mit Ferritmagneten realisierbar. **Fig. 11** zeigt einen Querschnitt mit Ferritmagneten **19'** und Sammlersegmenten **20', 21'** aus gepresstem Eisenpulver. Die Breite der Eisenpulverpressteile nimmt mit zunehmendem Abstand zum Luftspalt **15"** ab und die Breite der Ferritmagnete **19'** entsprechend zu. Der Faktor der Flusskonzentration beträgt in Fig. 11 ca. 5.

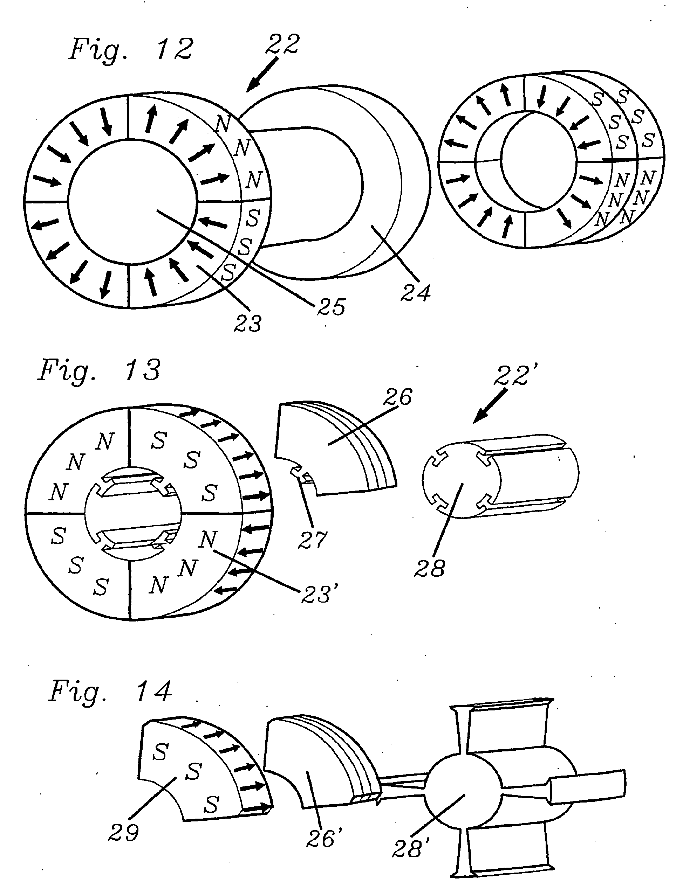

**Fig. 12** zeigt den dreidimensionalen Aufbau eines innerhalb des zylindrischen Luftspalts rotierenden Sekundärteils **22** mit Luftspaltmagneten **23,** die für hohe Umfangsgeschwindigkeiten als Kreisringe einstückig vorgefertigt und radial mehrpolig aufmagnetisiert sind. Die axiale Breite der Magnetringe **23** entspricht der Breite der Randpole plus Überhang. Die den Mittelpolen gegenüberliegenden Magnetpole werden durch zwei dieser Magnetringe **23** gebildet. Zwischen den entgegengesetzt magnetisierten Rand- und Mittelpolen einer Laufbahn und zwischen den Randpolen unterschiedlicher Laufbahnen sind Distanzringe **24** aus magnetisch und elektrisch schlecht leitendem Material angeordnet. An den radialen Innenflächen liegen die Magnetringe **24** flächig an einer Stange **25** aus weichmagnetischem Material an.

**Fig. 13** zeigt ein Sekundärteil **22'** in dem die Magnetringe **23'** in axiale Richtung mehrpolig magnetisiert sind. Sie bilden zusammen mit Sammlersegmenten **26** aus paketierten Elektroblechen eine Sammleranordnung. In Umfangsrichtung aufeinanderfolgende Sammlersegmente **26** weisen einen Abstand zueinander auf. Diese Lücke vermindert Streuflüsse entweder durch Isoliermaterial oder durch in Umfangsrichtung magnetisierte Magnete. Positioniert und gehalten werden die Sammlersegmente **26** und die Magnetringe **23'** durch radial nach innen stehende Zähne **27, 27'.** Die vorzugsweise aus unmagnetischem Stahl bestehende Profilstange **28** weist hierfür entsprechende T-Nuten auf.

In einer alternativen Bauform - **Fig. 14** **-** ist auch der Hartmagnet **29** in Umfangsrichtung entsprechend der Polzahl in Segmente unterteilt. Die Hartmagnete werden zusammen mit weichmagnetischen Sammlersegmenten **26'** axial in eine Profilstange **28'** aus unmagnetischem und isolierendem Material eingesetzt.

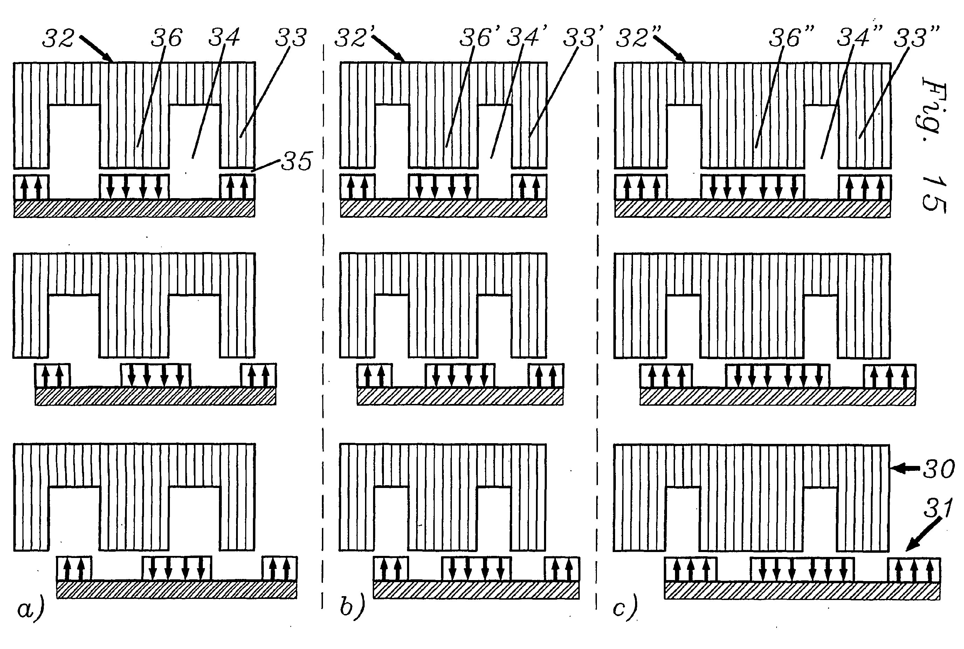

**Fig. 15** zeigt die Wirkung der Feldschwächung durch die Verschiebung von Primärteil **30** zu Sekundärteil **31** für drei Blechschnitte **32, 32', 32"** mit unterschiedlichem Verhältnis der Breiten von Randpol **33, 33', 33"** zu Nut **34, 34', 34'.** In Variante **a)** ist die Breite eines Randpols **33** kleiner als die breite der Nut **34.** In Variante **b)** sind beide Breiten gleich groß und in Variante **c)** sind die Randpole **33"** breiter als die Nuten **34".** In der oberen Reihe sind die Polflächen von Primär- und Sekundärteil aufeinander aufgerichtet und der magnetische Widerstand ist minimal. In der mittleren Reihe sind die Teile um den halben Verstellweg quer zur Bewegungsrichtung versetzt angeordnet und ca. die Hälfte der Magnetfeldlinien müssen einen längeren Weg im Luftspalt **35** zurücklegen. Der magnetische Widerstand im Magnetkreis steigt und das Feld wird geschwächt. In der unteren Reihe ist der magnetische Widerstand maximal. Zusätzlich bilden sich verstärkt Streufelder durch die Zahnköpfe des Mittelpols **36, 36', 36"** aus. Das Verhältnis von Nutbreite zu Polbreite wirkt sich weniger auf den Betrag der Feldschwächung sondern mehr auf den Anteil der Streuflüsse an der Feldschwächung aus.

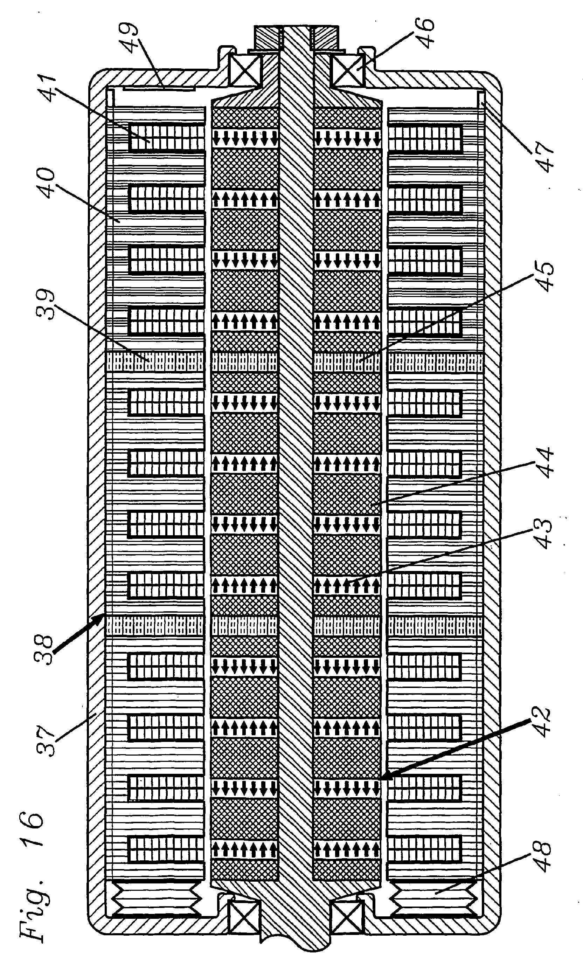

Eine rotierende, dreiphasige Maschine mit allen drei Lösungsansätzen der Erfindung zeigt **Fig. 16****.** Innerhalb des Gehäuses **37** ist das Primärteil **38** axial in drei baugleiche Abschnitte aufgeteilt, die durch Keramikscheiben **39** getrennt sind. Jeder dieser Abschnitte besteht aus einem kammförmigen weichmagnetischen Körper **40** in dessen Nuten aus Profildraht gewickelte Spulen **41** eingebettet sind. Die Spulen erstrecken sich in einer Nut tangential nur über einen Teil des Umfangs. Das Sekundärteil **42** besteht aus axial magnetisierten Neodymmagneten **43** zwischen weichmagnetischen Sammlersegmenten **44.** Auch im Sekundärteil werden drei baugleichen Abschnitten durch Isolierscheiben **45** getrennt. Der Rotor ist über zwei Lager **46** gegenüber dem Gehäuse **37** axial ortsfest und das Primärteil **38** kann gegenüber dem Gehäuse auf Gleitführungen **47** axial verschoben werden. Als Stellantrieb **48** dienen piezokeramischen Linearaktoren. Alternativ können auch pneumatische oder hydraulische Zylinder oder elektromechanische Antriebe eingesetzt werden. Ein Anschlag **49** begrenzt den Stellweg auf eine Länge, in der die Magnetkräfte gegen die Auslenkung wirken.

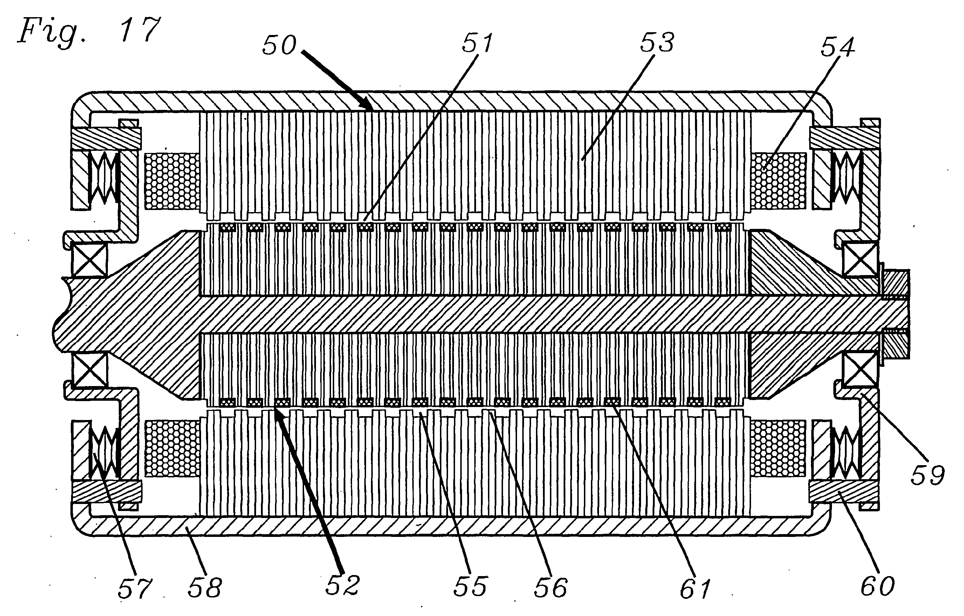

Die erfindungsgemäße Feldschwächung ist auch mit konventionell gewickelten Primärteilen **50** realisierbar, wenn der Luftspalt **51** quer zur Bewegungsrichtung auf beiden Seiten eine Zahnung aufweist. Eine derartige Maschine ist in **Fig. 17** dargestellt. Das rotierende Sekundärteil **52** weist in ein Blechpaket **53** eingebettete Hartmagnete auf, die in der gezeigten Rotorstellung nicht sichtbar sind. Das Primärteil **50** weist achsparallele Nuten auf in denen Spulen **54** einer konzentrierten oder verteilten Wicklung liegen. Sowohl das Blechpaket des Primärteils **50** als auch das Blechpaket **53** des Sekundärteils **52** werden aus zwei unterschiedlichen Stanzschnitten zusammengesetzt, wobei die Stanzschnitte unterschiedliche Innen- bzw. Außenradien aufweisen. Nach dem Paketieren weisen beide Blechpakete in Bewegungsrichtung verlaufende Rillen **55** in der Luftspaltfläche auf. Bei vollem Magnetfeld sind die Rippen **56** von Primär- und Sekundärteil aufeinander ausgerichtet. Durch zwei ringförmige Stellantriebe **57** kann der Gehäusemantel **58** mit dem Primärteil **50** gegenüber den Lagersitzen **59, 59'** axial verschoben werden. Führungsstifte **60** übertragen das Drehmoment. Bei maximalem Verstellweg liegen die Rippen **56** radial den Rillen **55** gegenüber. Durch eine Vergrößerung des magnetischen Widerstandes wird das Erregerfeld entsprechend geschwächt. In den Rillen des Rotors sind Bandageringe **61** angeordnet.

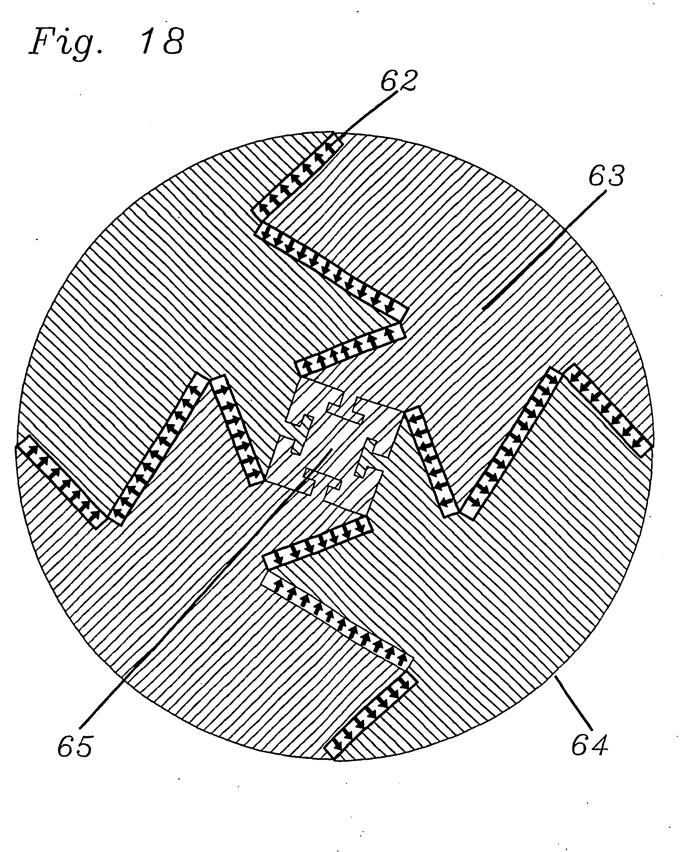

In **Fig. 18** wird der Querschnitt des Sekundärteils **52** aus Fig. 17 dargestellt. Der Blechschnitt wird durch blockförmige Hartmagnete **62** in vier baugleiche Ausschnitte **63** aufgeteilt, die radial nach außen an der Luftspaltoberfläche **64** Magnetpole mit in Umfangsrichtung abwechselnder Polarität bilden. Die Blockmagnete bilden einen ZickZack-Linie um eine radial von der Polgrenze zum Mittelpunkt der Welle **65** führenden Linie. Hierdurch erhöht sich die aktive Oberfläche der Hartmagnete **62** im Verhältnis zur Luftspaltoberfläche der Pole. Ist dieses Verhältnis größer als eins, so nimmt die Flussdichte zum Luftspalt **51** hin zu. Durch die Flächenvergrößerung wird der Arbeitspunkt im Magneten in einen Bereich mit größerem Energieprodukt abgesenkt und bei in etwa gleichen Magnetkosten steigt die Leistungsdichte der Maschine.

## Patentansprüche

1. Elektrische Maschine mit mindestens einem Primärteil (1, 30, 38, 50) und mindestens einem Sekundärteil (9, 22, 31, 42), wobei das Sekundärteil relativ zum Primärteil durch die Kraft magnetischer Felder bewegbar ist und zwischen Primärteil und Sekundärteil ein Luftspalt (15, 35) angeordnet ist, wobei das Sekundärteil Pole mit einer Polteilung in Bewegungsrichtung aufweist und das Primärteil Spulen (2, 17, 41) aus einem Leitermaterial aufweist, diese Spulen teilweise in mindestens einem weichmagnetischen Körper (3, 40) liegen und der magnetische Fluss im Primärteil vorwiegend transversal zur Bewegungsrichtung fließt, wobei die Spulen (2, 17, 41) Teilbereiche (6) in Bewegungsrichtung aufweisen,
**dadurch gekennzeichnet, dass** die Luftspaltfläche aufgeteilt ist und magnetisch unterschiedlich wirksame Zonen aufweist, die in Bewegungsrichtung große Abmessungen und quer zur Bewegungsrichtung kleine Abmessugen aufweisen und die die Luftspaltfläche schachbrettartig aufteilen wobei die Spulen (2, 17, 41) im Verhältnis zu den in Bewegungsrichtung verlaufenden Teilbereichen (6) kürzere quer zur Bewegungsrichtung verlaufende Teilbereiche (7) aufweisen und Spulen unterschiedlicher Phase quer zur Bewegungsrichtung nebeneinander angeordnet sind.

2. Elektrische Maschine nach Anspruch 1,
wobei die Abmessung der in Bewegungsrichtung verlaufenden Teilbereiche (6) einer Spule (2, 17, 41) jeweils in etwa der Polteilung des Sekundärteil (9, 22, 31, 42) entspricht und der überwiegende Teil der in Bewegungsrichtung verlaufende Teilbereiche (6) von drei Seiten von mindestens einem weichmagnetischen Körper (15, 35) umschlossen werden, dieser weichmagnetische Körper an der Luftspaltoberfläche Pole (4, 5, 33, 36) bildet und die quer zur Bewegungsrichtung verlaufenden Teilbereiche (7) der Spule in etwa den gleichen Abstand zum Luftspalt (15, 35) aufweisen wie die in Bewegungsrichtung verlaufenden Teilbereiche (6).

3. Elektrische Maschine nach Anspruch 1,
wobei die Spulen (2, 17, 41) in der Projektion zum Luftspalt (15, 35) einen annähernd rechteckförmigen Querschnitt aufweisen und C-Kerne (16) aus amorphem oder nanokristallinen, weichmagnetischen Bändern die beiden längeren Teilbereiche der Spule von drei Seiten umschließen.

4. Elektrische Maschine nach Anspruch 1,
wobei quer zur Bewegungsrichtung Spulen (2, 17, 41) unterschiedlicher Phasen in Laufbahnen (8) angeordnet sind und im Sekundärteil Pole mit einer ähnlichen Struktur angeordnet sind.

5. Elektrische Maschine mit mindestens einem Primärteil (1, 30, 38, 50) und mindestens einem Sekundärteil (9, 22, 31, 42), wobei das Sekundärteil relativ zum Primärteil durch die Kraft magnetischer Felder bewegbar ist und zwischen Primärteil und Sekundärteil ein Luftspalt (15, 35) angeordnet ist, wobei das Sekundärteil Pole mit einer Polteilung in Bewegungsrichtung aufweist und das Primärteil Spulen (2, 17, 41) aus einem Leitermaterial aufweist, diese Spulen teilweise in mindestens einem weichmagnetischen Körper (3, 40) liegen und der magnetische Fluss im Primärteil vorwiegend transversal zur Bewegungsrichtung fließt, wobei die Spulen (2, 17, 41) Teilbereiche (6) in Bewegungsrichtung aufweisen,
**dadurch gekennzeichnet , dass** die Luftspaltfläche aufgeteilt ist und magnetisch unterschiedlich wirksame Zonen aufweist, die in Bewegungsrichtung große Abmessungen und quer zur Bewegungsrichtung kleine Abmessungen aufweisen und die die Luftspaltfläche schachbrettartig aufteilen, wobei im Sekundärteil in etwa quer zur Bewegungsrichtung magnetisierte Hartmagnete (19, 29, 43) quer zur Bewegungsrichtung durch weichmagnetische Sammlersegmente (20, 21, 26, 44) getrennt sind und zwei derart getrennte Hartmagnete eine entgegengesetzte Polarität aufweisen.

6. Elektrische Maschine nach Anspruch 5,
wobei mindestens zwei Sammlersegmente (20, 21, 26, 44) in Bewegungsrichtung aufeinanderfolgen und durch magnetisch schlecht leitendes Material (12) oder durch als Polblenden wirkende Hartmagnete getrennt sind, wobei die in Bewegungsrichtung aufeinanderfolgende Sammlersegmente (20, 21, 26, 44) zum Luftspalt (15, 35) hin Pole unterschiedlicher Polarität bilden.

7. Elektrische Maschine nach Anspruch 5,
wobei die Länge der Sammlersegmente (20, 21, 26, 44) in Bewegungsrichtung größer ist als ihre Breite quer zur Bewegungsrichtung, die Sammlersegmente (20, 21, 26, 44) aus gepresstem oder gesintertem weichmagnetischen Pulver bestehen und ihr Querschnitt in der Projektion zum Luftspalt (15, 35) mit zunehmendem Abstand zum Luftspalt abnimmt.

8. Elektrische Maschine nach Anspruch 5,
wobei zwei Baugrößen von Sammlersegmenten (20, 21, 26, 44) mit quer zur Bewegungsrichtung unterschiedlicher Breite im Sekundärteil (9, 22, 31, 42) angeordnet sind, die Breite des kleineren Sammlersegments (21) am Luftspalt (15, 35) in etwa der halben Breite des größeren Sammlersegments (20) entspricht und in Bewegungsrichtung aufeinanderfolgende kleine Sammlersegmente (21) den Rand einer Laufbahn (8) bilden, in der quer zur Bewegungsrichtung Hartmagnete (19, 29, 43) und Sammlersegmente (20, 26, 44) flächig aneinander liegen.

9. Elektrische Maschine mit mindestens einem Primärteil (1, 30, 38, 50) und mindestens einem Sekundärteil (9, 22, 31, 42), wobei das Sekundärteil relativ zum Primärteil durch die Kraft magnetischer Felder bewegbar ist und zwischen Primärteil und Sekundärteil ein Luftspalt (15, 35) angeordnet ist, wobei das Sekundärteil Pole mit einer Polteilung in Bewegungsrichtung aufweist und das Primärteil Spulen (2, 17, 41) aus einem Leitermaterial aufweist und diese Spulen teilweise in mindestens einem weichmagnetischen Körper (3, 40) liegen, **dadurch gekennzeichenet**, dass die Luftspaltfläche aufgeteilt ist und magnetisch unterschieldlich wirksame Zonen aufweist, die in Bewegunasrichtung große Abmessungen und quer zur Bewegungsrichtung kleine Abmessungen aufweisen und die die Luftspaltfläche schachbrettartig aufteilen, wobei im Primär- und Sekundärteil quer zur Bewegungsrichtung für den Magnetfluss Zonen (55, 56) mit unterschiedlichem magnetischen Widerstand abwechselnd angeordnet sind und mindestens ein Sekundärteil zu mindestens einem Primärteil quer zur Bewegungsrichtung verschiebbar ist.

10. Elektrische Maschine nach Anspruch 9,
wobei das verschiebbare Teil (38, 50) über mindestens eine Führung (47, 60) in Bewegungsrichtung und in Richtung zum Luftspalt (35, 51) gehalten wird und das verschiebbare Teil aus zwei Hälften besteht, die zeitgleich durch einen Stellantrieb in entgegengesetzte Richtungen aus ihrer Vorzugsstellung bewegt werden, wobei die maximale Strecke der Verschiebung der Breite einer Zone (55, 56) mit gleichem magnetischen Widerstand oder der Breite eines magnetischen Pols (11) quer zur Bewegungsrichtung entspricht.

## Claims

1. Electric machine with at least one primary part (1, 30, 38, 50) and at least one secondary part (9, 22, 31, 42), said secondary part and said primary part being movable with respect to each other by the force of magnetic fields, and with an air gap (15, 35) that is arranged between said primary part and said secondary part, said secondary part having poles with a pole pitch in direction of movement, and said primary part having coils (2, 17, 41) made of a conductive material, said coils lying partially in at least one soft magnetic body (3, 40), and the magnetic flux in said primary part flowing predominantly transversally to the direction of movement, and said coils (2, 17, 41) having partial areas (6) in direction of movement,
wherein the air gap surface is separated into magnetically differentiated zones, said zones having large dimensions in direction of movement and small dimensions perpendicular to the direction of movement and said zones dividing said air gap surface in a checkerboard pattern, and said coils (2, 17, 41) have shorter partial areas (7) perpendicular to the direction of movement in comparison to the partial areas (6) in direction of movement, and coils of different phases are arranged side by side perpendicular to the direction of movement.

2. Electric machine in accordance with claim 1,
wherein the dimension of said partial areas (6) of said coil (2, 17, 41) disposed in direction of movement corresponds approximately to said pole pitch of said secondary part (9, 22 31, 42) and the predominant part of the partial areas (6) disposed in direction of movement is enclosed on three sides by at least one soft magnetic body (15, 35), said soft magnetic body forming poles (4, 5, 33, 36) at the air gap surface, and the partial areas (7) of said coil disposed perpendicular to the direction of movement have approximately the same distance to the air gap (15, 35) as the partial areas (6) disposed in direction of movement.

3. Electric machine in accordance with claim 1,
**wherein** said coils (2, 17, 41) in the projection towards said air gap (15, 35) have a nearly rectangular cross section and C-cores (16) of amorphous or nanocrystalline soft magnetic strips enclose the two said longer partial areas of said coil on three sides.

4. Electric machine in accordance with claim 1,
**wherein** perpendicular to the direction of movement said coils (2, 17, 41) of different phases are arranged in running tracks (8), and in the said secondary part are arranged said poles of a similar structure.

5. Electric machine with at least one primary part (1, 30, 38, 50) and at least one secondary part (9, 22, 31, 42), said secondary part and said primary part being movable with respect to each other by the force of magnetic fields, and with an air gap (15, 35) that is arranged between said primary part and said secondary part, said secondary part having poles with a pole pitch in direction of movement, and said primary part having coils (2, 17, 41) made of a conductive material, said coils lying partially In at least on soft magnetic body (3, 40), and the magnetic flux in said primary part flowing predominantly transversally to the direction of movement, and said coils (2, 17, 41) having partial areas (6) in direction of movement,
**wherein** the air gap surface is divided into magnetically differentiated zones, said zones having large dimensions In direction of movement and small dimensions perpendicular to the direction of movement and said zones dividing said air gap in a checkerboard pattern, and in said secondary part, approximately perpendicular to the direction of movement, magnetized permanent magnets (19, 29, 43) are separated perpendicularly to the direction of movement by soft magnetic collector segments (20, 21, 26, 44) and two such separated permanent magnets have opposite polarity.

6. Electric machine in accordance with claim 5,
**wherein** at least two said collector segments (20, 21, 26, 44) are arranged sequentially in direction of movement and are separated by material (12) of poor magnetic conductivity or by permanent magnets that act as pole screen, said collector segments (20, 21, 28, 44) arranged sequentially in direction of movement forming poles of different polarity towards said air gap (15, 35).

7. Electric machine in accordance with claim 5,
**wherein** the length of said collector segments (20, 21, 26, 44) in direction of movement is larger than their width perpendicular to the direction of movement, and said collector segments (20 21, 26, 44) consist of pressed or sintered soft magnetic powder, and the cross section of said collector segments in their projection to said air gap (15, 35) is decreasing with increasing distance from said air gap.

8. Electric machine in accordance with claim 5,
**wherein** two structural sizes of said collector segments (20, 21, 26, 44) having different widths perpendicular to the direction of movement are arranged in said secondary part (9, 22, 31, 42), the width of the smaller said collector segment (21) at said air gap (15, 35) corresponding approximately to one half the width of the larger said collector segment (20), and in direction of movement sequentially arranged smaller said collector segments (21) form the edge of a running track (8) within which perpendicular to the direction of movement said permanent magnets (19, 29, 43) and said collector segments (20 26, 44) are abutting each other.

9. Electric machine with at least one primary part (1, 30, 38, 50) and at least one secondary part (9, 22, 31, 42), said secondary part and said primary part being movable with respect to each other by the force of magnetic fields, and with an air gap (15, 35) that Is arranged between said primary part and said secondary part, said secondary part having poles with a pole pitch in direction of movement, and said primary part having coils (2, 17, 41) made of a conductive material, said coils lying partially in at least on soft magnetic body (3, 40),
**wherein** the air gap surface is divided into magnetically differentiated zones, said zones having large dimensions In direction of movement and small dimensions perpendicular to the direction of movement and said zones dividing said air gap in a checkerboard pattern, and in said primary and secondary part perpendicular to the direction of movement, zones of different magnetic resistance (55, 56) are alternatingly arranged for the magnetic flux, and at least one said secondary part is movable reference to at least one said primary part perpendicular to the direction of movement.

10. Electric machine In accordance with claim 9,
**wherein** said movable part (38, 50) is held by at least one slideway (47, 60) in direction of movement and in direction to the air gap (35, 51), said movable part consisting of two halves which are shifted at the same time by an actuator into opposite directions from their preferred positions, the maximum distance of shift corresponding to the width of said zone (55, 56) of the same magnetic resistance or the width of said magnetic pole (11) perpendicular to the direction of movement.

## Revendications

1. Machine électrique composée au minimum d'une partie primaire et d'une partie secondaire sachant que la partie secondaire exerce un mouvement relatif par rapport à la partie primaire engendré par les forces de champs magnétiques et la partie primaire et secondaire étant distants d'un entrefer (15, 35) sachant que la partie secondaire présente des pôles avec un pas polaire dans la direction du mouvement et la partie primaire des bobines (2, 17, 41) en matériau conducteur, qui sont placées partiellement dans au moins un corps magnétique doux (3, 40) et que le flux magnétique dans la partie primaire traverse essentiellement de manière transverse par rapport à la direction du mouvement sachant que les bobines (2, 17, 41) présentent des parties (6) en direction du mouvement,
**caractérisé par** la surface de l'entrefer est répartie en différentes zones de performances magnétiques, de grandes dimensions en direction de mouvement et de petites dimensions perpendiculaire à la direction de mouvement et qui répartissent la surface d'entrefer en forme d'échiquier, sachant que, par rapport aux parties (6) en direction du mouvement, les bobines (2, 17, 41) présentent des parties (7) plus courtes perpendiculairement à la direction de mouvement et que des bobines de phases différentes perpendiculaires à la direction de mouvement sont placées côte à côte.

2. Machine électrique selon revendication 1,
sachant que les dimensions des parties (6) d'une bobine (2, 17, 41) en direction du mouvement correspondant approximativement au pas polaire de la partie secondaire (9, 22, 31, 42) et que la majorité des parties (6) en direction de mouvement est enfermé sur au minimum trois cotés par au minimum un corps magnétique doux (15, 35), ce corps magnétique doux crée des pôles (4, 5, 33, 36) à la surface d'entrefer et les parties (7) des bobines perpendiculaires à la direction de mouvement présentent on environ la même distance de l'entrefer (15, 35) que les parties (6) disposées dans la direction du mouvement.

3. Machine électrique selon revendication 1,
sachant que les bobines (2, 17, 41) présentent un coupe rectangulaire dans la projection sur l'entrefer (15, 35) et que les deux parties allongées de la bobine sont entourées en trois cotés par des corps (16) en forme de C en bandes magnétiques doux en amorphe ou en nanocristallin.

4. Machine électrique selon revendication 1,
sachant que des bobines (2, 17,41), perpendiculaire à la direction de mouvement, de différentes phases sont disposées sur des pistes (8) et que dans la partie secondaire des pôles sont positionnés avec une structure similaire.

5. Machine électrique composée au minimum d'une partie primaire et d'une partie secondaire sachant que la partie secondaire exerce un mouvement relatif par rapport à la partie primaire engendré par les forces de champs magnétiques et la partie primaire et secondaire étant distants d'un entrefer (15, 35) sachant que la partie secondaire présente des pôles avec un pas polaire dans la direction du mouvement et la partie primaire des bobines (2, 17, 41) en matériau conducteur, qui sont placées partiellement dans au moins un corps magnétique doux (3, 40) et que le flux magnétique dans la partie primaire traverse essentiellement de manière transverse par rapport à la direction du mouvement sachant que les bobines (2, 17, 41) présentent des parties (6) en direction du mouvement,
**caractérisé par** la surface de l'entrefer est répartie en différentes zones de performances magnétiques, de grandes dimensions en direction de mouvement et de petites dimensions perpendiculaire à la direction de mouvement et qui répartissent la surface d'entrefer en forme d'échiquier, sachant que dans la partie secondaire, approximativement perpendiculaire à la direction de mouvement, les aimants durs (19, 29, 43) aimantés sont séparés par des segments collecteurs (20, 21, 26, 44) magnétiques doux et que deux de ces aimants durs séparés présentent une polarité Inverse.

6. Machine électrique selon revendication 5,
sachant qu'un minimum de deux segments collecteurs (20, 21, 26) se succèdent en direction du mouvement et sont séparés par un matériau mauvais conducteur magnétique (12) ou par des aimants durs pour un écrantage magnétique de pôle, sachant que les segments collecteurs (20, 21, 26, 44) qui s'ensuivent créent des pôles avec des polarités différenciées en direction de l'entrefer (15, 35).

7. Machine électrique selon revendication 5,
sachant la longueur des segments collecteurs (20, 21, 26, 44) en direction de mouvement est plus grande que sa largeur perpendiculaire à la direction de mouvement les segments collecteurs (20,21,26, 44) perpendiculaires à la direction de mouvement consiste au poudre magnétique fritté ou compacté et leur section dans la projection sur l'entrefer (15, 35) diminue avec l'augmentation de la distance par rapport à l'entrefer.

8. Machine électrique selon revendication 5,
sachant que deux gabarits de segments collecteurs (20, 21, 26, 44) différenciés par leur largeur perpendiculaire à la direction de mouvement sont positionnés dans la partie secondaire (9, 22, 31 42), que la largeur de segment collecteur est inférieure (21) correspond environ à la moitié de la largeur du plus grand segment collecteur (20) au niveau de l'entrefer (15, 35) et que dans la direction de mouvement la limite de la piste est crée par des parties collectrices inférieures (21) qui s'ensuivent et dans laquelle des aimants durs (19, 29, 43) et des segments collecteurs (20, 26, 44) sont positionnées face à face perpendiculairement la direction de mouvement.

9. Machine électrique composée au minimum d'une partie primaire (1, 30, 38, 50) et d'une partie secondaire (9, 22, 31, 42), sachant que la partie secondaire exerce un mouvement relatif par rapport à la partie primaire engendré par les forces de champs magnétiques et la partie primaire et secondaire étant distants d'un entrefer (15, 35) sachant que la partie secondaire présente des pôles avec un pas polaire dans la direction du mouvement et a partie primaire des bobines (2, 17, 41) en matériau conducteur, qui sont placées partiellement dans au moins un corps magnétique doux (3, 40),
**caractérisé par** la surface de l'entrefer est répartie en différentes zones de performances magnétiques, de grandes dimensions en direction de mouvement et de petites dimensions perpendiculaire à la direction de mouvement et qui répartissent la surface d'entrefer en forme d'échiquier,
sachant que dans la partie primaire et secondaire, des zones (55, 56) avec différentes résistances magnétiques sont positionnées tour à tour perpendiculairement à la direction de mouvement et qu' au minimum une partie secondaire peut être déplacé perpendiculairement à la direction de mouvement par rapport à au minimum une partie primaire.

10. Machine électrique selon revendication 9,
sachant que la partie mobile (38, 50) est tenu par au minimum un guidage (47, 60) en direction de mouvement et en direction de l'entrefer, sachant que la partie mobile est constituée de deux moitiés sont déplacées simultanément par un actuateur dans des directions opposées partant de leur positions de préférence, sachant que la distance maximale du déplacement correspond à la largeur d'une zone (55, 56) avec des résistances magnétiques identiques ou à la largeur d'un pole magnétique (11 ) perpendiculaire à la direction de mouvement.
